# EUROPEAN PATENT SPECIFICATION

(11) **EP 3 730 934 B1**
(45) Date of publication and mention of the grant of the patent: **13.09.2023**
(21) Application number: 19171228.0
(22) Date of filing: 25.04.2019
(51) Int. Cl.: G01N 27/90, E21B 47/08, E21B 19/00

(54) **WELLBORE ROD INSPECTION SYSTEM AND METHOD**
SYSTEM UND VERFAHREN ZUR INSPEKTION VON BOHRLOCHSTANGEN
PROCÉDÉ ET SYSTÈME D'INSPECTION DE TIGE DE FORAGE

(43) Date of publication of application: 28.10.2020
(73) Proprietor: Nov Downhole Eurasia Limited, Gloucestershire GL10 3RQ (GB)
(72) Inventor: JANSSEN, Matthias, 29352 Adeilheidsdorf (DE); WORMS, Manfred, 29336 Nienhagen (DE); SWIATEK, Slawomir, 29221 Celle (DE)
(74) Representative: Marks & Clerk LLP

(56) References cited:
- EP-A2- 0 999 444
- WO-A1-2016/080947
- JP-A- 2016 114 533
- US-A- 3 694 740
- US-A- 3 958 049
- US-A- 4 492 115
- US-A- 5 914 596
- US-B1- 6 483 302

## Description

### FIELD

The subject application relates generally to wellbore rods, and in particular, to a wellbore rod inspection system and method.

### BACKGROUND

In the oil and gas industry wellbore rods are used. In particular, wellbore rods, such as sucker rods, can be used to join together surface components with downhole components. A sucker rod may be steel rod, typically between 25 and 30 feet (7 to 9 meters) in length. Sucker rods can be screwed together within tubing to form a complete pump drive string. The sucker rods are typically equipped with centralizers at fixed distances to protect the sucker rods from material damage. A sucker rod may have more than one associated centralizer located along the length of the sucker rod. The centralizer has a greater diameter than the sucker rod. The centralizer may be made of damage resistant plastic, and adhered to the associated sucker rod.

In the oil and gas industry, wellbore rods are often inspected from time to time for faults. Generally, the wellbore rod is longitudinally fed along a conveyor through an inspection tool. As the wellbore rod passes through the tool, the wellbore rod faults (e.g. cracks, notches, pits, holes and/or corrosion phenomena) in the wellbore rod may be detected. Typically, sensors may be in sliding contact with the wellbore rod as it passes through the tool. If the sensors are not in contact with the rod, the sensors must be extremely sensitive and have extremely high signal gain to obtain useful information. In addition, mechanical vibrations from movement of the wellbore rods along the conveyor may result in unidentifiable signals given the extremely high signal gain.

As previously stated, wellbore rods such as sucker rods can be equipped with centralizers that have greater diameters than the sucker rods. Removing the centralizers from the sucker rods prior to inspection is time consuming and economically unfavourable. Furthermore, the increased diameter of the centralizers relative to the sucker rods does not allow from sliding contact of the sensors of the inspection tool. Therefore, inspection using the MFL tool is not possible without employing non-contact sensors which have, as previously stated, extremely high signal gain that is problematic with conveyor induced vibrations.

US Patent No 5914596 A describes a non-destructive inspection system for testing oilfield tubulars/coiled tubing which includes a support housing including a thru-bore for receiving coiled tubing, a magnetizing coil for saturating the tubing and sensors for detecting defects.

US Patent No. 6483302 B1 describes an apparatus for magnetic inspection of ferrous conduits having a housing, at least one angled coil within the housing encircling a conduit travel passage to create a transverse flux component and a sensor array to detect flux patterns.

US Patent No 4492115 A describes an apparatus and methods for determining the extent of defects in ferromagnetic tubular elements comprising applying a suturing and fluctuating magnetic field to tubing measuring the magnitude and changes to the induced field to quantify defects in the tubing.

It is therefore an object to provide a wellbore rod inspection system and method that improves the ability with which to detect faults or the like in a cost and/or efficient effective manner.

### SUMMARY

It should be appreciated that this Summary is provided to introduce a selection of concepts in a simplified form that are further described below in the Detailed Description. This Summary is not intended to be used to limit the scope of the claimed subject matter.

Accordingly, in an aspect there is provided a wellbore rod inspection system according to claim 1.

In one or more embodiments, the sensor assembly may be further configured to: detect magnetic flux leakage at a leading zone of the wellbore rod; and detect magnetic flux leakage at a lagging zone of the wellbore rod. The leading zone may be longitudinally in advance of the lagging zone, for example, on the wellbore rod as the wellbore rod is conveyed.

In one or more embodiments, the processor may be further configured to: subtract the magnetic flux leakage at the leading value from the magnetic flux leakage at the lagging zone to detect faults in the wellbore rod.

In one or more embodiments, the sensors are radially mounted on a printed circuit board, PCB, and the sensors are positioned to form a central aperture in the PCB.

In one or more embodiments, the coil arrangement may comprise a Helmholtz coil arrangement. The sensor assembly may be positioned between two spaced apart magnetic coils of the Helmholtz coil.

In one or more embodiments, the roller assembly comprises: a first set of rollers mounted on a first set of U brackets on a first mounting plate; and a second set of roller mounted on a second set of U brackets on a second mounting plate.

Accordingly, in another aspect, there is a method of inspecting a wellbore rod according to claim 7.

In one or more embodiments, detecting magnetic flux leakage may comprise: detecting magnetic flux leakage at a leading zone of the wellbore rod; and detecting magnetic flux leakage at a lagging zone of the wellbore rod. The leading zone may be longitudinally in advance of the lagging zone on the wellbore rod as the wellbore rod is conveyed.

In one or more embodiments, processing may comprise: subtracting the magnetic flux leakage at the leading zone from the magnetic flux leakage at the lagging zone to detect faults in the wellbore rod.

In one or more embodiments, conveying the wellbore rod may comprise slidingly driving the carriage on sets of rollers (e.g. perpendicular rollers) of the roller arrangement.

In one or more embodiments, magnetizing the wellbore rod may comprise magnetizing the wellbore rod with a magnetic field generated by a Helmholtz coil. The method may comprise conveying the wellbore rod through an aperture of a first magnetic coil of the Helmholtz coil; conveying the wellbore rod through an aperture formed by the radially spaced sensors of the sensor assembly; and conveying the wellbore rod through an aperture formed by a second magnetic coil of the Helmholtz coil.

In one or more embodiments, detecting the magnetic flux leakage at the leading zone may comprise continuously detecting the magnetic flux leakage at the leading zone while the wellbore rod is conveyed.

In one or more embodiments, the magnetic flux leakage at the leading zone may comprise a moving average of the magnetic flux leakage over the leading zone of the wellbore rod.

In one or more embodiments, detecting the magnetic flux leakage at the lagging zone may comprise continuously detecting the magnetic flux leakage at the lagging zone while the wellbore rod is conveyed.

In one or more embodiments, the magnetic flux leakage at the lagging zone may comprise a moving average of the magnetic flux leakage over the lagging zone of the wellbore rod.

Accordingly, in another aspect, there is provided a method of inspecting a wellbore rod which is described as an example suitable for understanding the disclosure. The method may comprise: detecting magnetic flux leakage at a leading zone of a wellbore rod with the sensor assembly as the wellbore rod is conveyed on a carriage on a roller arrangement; detecting magnetic flux leakage at a lagging zone of the wellbore rod, the leading zone being longitudinally in advance of the lagging zone on the wellbore rod as the wellbore rod is conveyed; and processing the magnetic flux leakage at the leading zone and the magnetic flux leakage at the lagging zone to detect faults in the wellbore rod.

In one or more embodiments, the processing may comprise: subtracting the magnetic flux leakage at the leading zone from the magnetic flux leakage at the lagging zone to detect faults in the wellbore rod.

In one or more embodiments, the method may further comprise: conveying the wellbore rod on the carriage on the roller arrangement; and magnetizing the wellbore rod with a magnetic field generated by a coil arrangement.

In one or more embodiments, conveying the wellbore rod may comprise slidingly driving the carriage on sets of perpendicular rollers of the roller arrangement.

In one or more embodiments, magnetizing the wellbore rod may comprise magnetizing the wellbore rod with a magnetic field generated by a Helmholtz coil, and conveying the wellbore rod comprises: conveying the wellbore rod through an aperture of a first magnetic coil of the Helmholtz coil; conveying the wellbore rod through an aperture formed by the radially spaced sensors of the sensor assembly; and conveying the wellbore rod through an aperture formed by a second magnetic coil of the Helmholtz coil.

In one or more embodiments, detecting the magnetic flux leakage at the leading zone may comprise continuously detecting the magnetic flux leakage at the leading zone while the wellbore rod is conveyed.

In one or more embodiments, the magnetic flux leakage at the leading zone may comprise a moving average of the magnetic flux leakage over the leading zone of the wellbore rod.

In one or more embodiments, detecting the magnetic flux leakage at the lagging zone may comprise continuously detecting the magnetic flux leakage at the lagging zone while the wellbore rod is conveyed.

In one or more embodiments, the magnetic flux leakage at the lagging zone may comprise a moving average of the magnetic flux leakage over the lagging zone of the wellbore rod.

The invention includes one or more corresponding aspects, embodiments or features in isolation or in various combinations whether or not specifically stated (including claimed) in that combination or in isolation. As will be appreciated, features associated with particular recited embodiments relating to systems may be equally appropriate as features of embodiments relating specifically to methods of operation or use, and vice versa.

It will be appreciated that one or more embodiments/aspects may be useful in providing an inspection system and method that improves the ability with which to detect faults or the like in a cost and/or efficient effective manner.

The above summary is intended to be merely exemplary and non-limiting.

### BRIEF DESCRIPTION OF THE DRAWINGS

Embodiments will now be described more fully with reference to the accompanying drawings, in which:
Figure 1 is a simplified elevation view of a wellbore rod inspection system in accordance with an aspect of the disclosure;
Figure 2 is an elevation view of the conveyor of the wellbore rod inspection system of Figure 1;
Figure 3 is a partial perspective view of the conveyor of Figure 2;
Figure 4 is a plan view of a sensor assembly of the wellbore rod inspection system of Figure 1;
Figure 5 is a flowchart of a method of inspecting a wellbore rod in accordance with an aspect of the disclosure;
Figure 6a is a photograph of a sucker rod with a fault used during simulation of the wellbore rod inspection system of Figure 1;
Figure 6b is a graph of simulation measurement results of the sucker rod of Figure 6a;
Figure 7a is a photograph of another sucker rod with a fault used during simulation of the wellbore rod inspection system of Figure 1;
Figure 7b is a graph of simulation measurement results of the sucker rod of Figure 7a;
Figure 8 is a flowchart of a detection and processing method in accordance with an aspect of the disclosure; and
Figure 9 is a diagram of the sucker rod of the wellbore rod inspection system of Figure 1 with highlighted zones.

### DETAILED DESCRIPTION

The foregoing summary, as well as the following detailed description of certain embodiments will be better understood when read in conjunction with the accompanying drawings. As will be appreciated, like reference characters are used to refer to like elements throughout the description and drawings. As used herein, an element or feature recited in the singular and preceded by the word "a" or "an" should be understood as not necessarily excluding a plural of the elements or features. Further, references to "one example" or "one embodiment" are not intended to be interpreted as excluding the existence of additional examples or embodiments that also incorporate the recited elements or features of that one example or one embodiment. Moreover, unless explicitly stated to the contrary, examples or embodiments "comprising", "having" or "including" an element or feature or a plurality of elements or features having a particular property may further include additional elements or features not having that particular property. Also, it will be appreciated that the terms "comprises", "has" and "includes" mean "including but not limited to" and the terms "comprising", "having" and "including" have equivalent meanings.

As used herein, the term "and/or" can include any and all combinations of one or more of the associated listed elements or features.

It will be understood that when an element or feature is referred to as being "on", "attached" to, "connected" to, "coupled" with, "contacting", etc. another element or feature, that element or feature can be directly on, attached to, connected to, coupled with or contacting the other element or feature or intervening elements may also be present. In contrast, when an element or feature is referred to as being, for example, "directly on", "directly attached" to, "directly connected" to, "directly coupled" with or "directly contacting" another element of feature, there are no intervening elements or features present.

It will be understood that spatially relative terms, such as "under", "below", "lower", "over", "above", "upper", "front", "back" and the like, may be used herein for ease of describing the relationship of an element or feature to another element or feature as depicted in the figures. The spatially relative terms can however, encompass different orientations in use or operation in addition to the orientation depicted in the figures.

Reference herein to "example" means that one or more feature, structure, element, component, characteristic and/or operational step described in connection with the example is included in at least one embodiment and or implementation of the subject matter according to the present disclosure. Thus, the phrases "an example," "another example," and similar language throughout the present disclosure may, but do not necessarily, refer to the same example. Further, the subject matter characterizing any one example may, but does not necessarily, include the subject matter characterizing any other example.

Reference herein to "configured" denotes an actual state of configuration that fundamentally ties the element or feature to the physical characteristics of the element or feature preceding the phrase "configured to".

Unless otherwise indicated, the terms "first," "second," etc. are used herein merely as labels, and are not intended to impose ordinal, positional, or hierarchical requirements on the items to which these terms refer. Moreover, reference to a "second" item does not require or preclude the existence of lower-numbered item (e.g., a "first" item) and/or a higher-numbered item (e.g., a "third" item).

As used herein, the terms "approximately" and "about" represent an amount close to the stated amount that still performs the desired function or achieves the desired result. For example, the terms "approximately" and "about" may refer to an amount that is within less than 10% of, within less than 5% of, within less than 1% of, within less than 0.1% of, or within less than 0.01% of the stated amount.

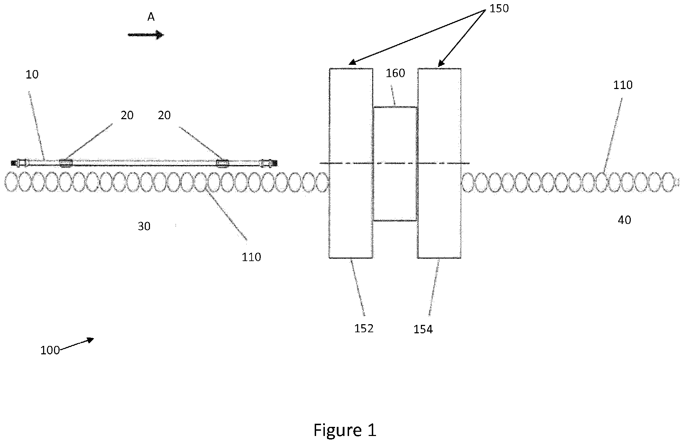

Turning now to Figure 1, a simplified elevation view of a wellbore rod inspection system is shown and generally identified by reference numeral 100. The wellbore rod inspection system 100 is configured to inspect a wellbore rod for faults as will be described. The wellbore rod may be a pump rod, a sucker rod or any other rod for use in the oil and gas industry. For the purposes of the following examples, and for ease of explanation, in the following embodiments the wellbore rod is a sucker rod 10. A skilled reader will however be able to implement various alternative embodiments accordingly.

Here, the sucker rod 10 comprises one or more protectors. In this embodiment, the sucker rod 10 is able to be magnetized (e.g. made of ferromagnetic material). In this embodiment, the sucker rod 10 is steel, and may be considered to be a generally elongate cylindrical rod (e.g. a polished rod). Here, the protectors are centralizers 20. The centralizers 20 are configured to be adhered to the sucker rod 10. The centralizers 20 are configured to protect the sucker rod 10 from damage. Each centralizer 20 has a greater radius than the sucker rod 10. In this particular example, the centralizers 20 are made of plastic (e.g. cannot be magnetized).

Faults in the sucker rod 10 are local phenomena that may render the sucker rod 10 unsuitable for further use. In contrast, generally uniform corrosion of the sucker rod 10 may not necessarily render the sucker rod unsuitable for further use. Faults in the sucker rod 10 may include cracks, notches, pits, holes and/or corrosion phenomena. A fault may therefore be considered to be a localised defect or the like that may limit the service of the rod, and may be considered to be different from the general global condition of the rod (even if globally the rod has experienced global wear and tear or corrosion effects).

In this example, the wellbore rod inspection system 100 comprises: a conveyor 110, a coil arrangement and a sensor assembly 160. In this embodiment, the wellbore rod inspection system 110 further comprises a drive (not shown).

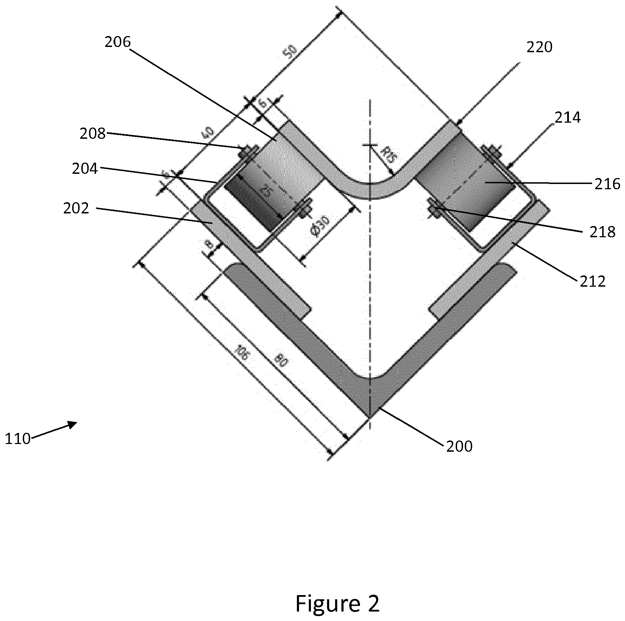

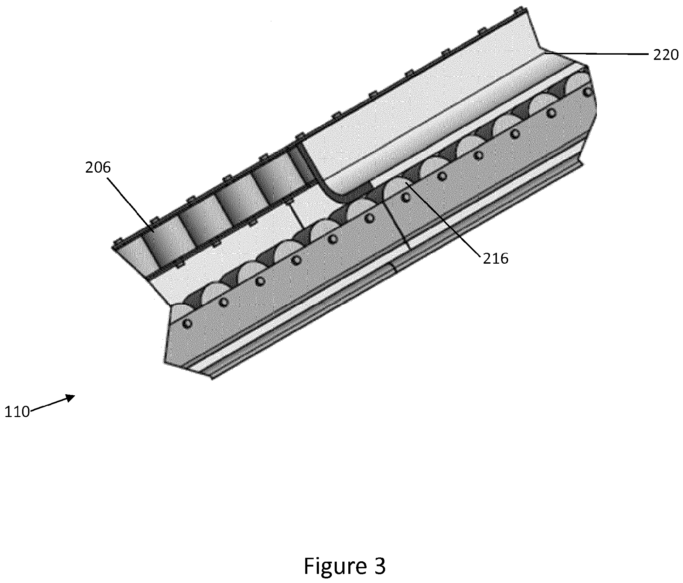

The conveyor 110 is configured to convey the sucker rod 10 for inspection. Specifically, the conveyor 110 is configured to convey the sucker rod 10 to the coil arrangement and the sensor assembly 160. Turning now to Figures 2 and 3, the conveyor 110 is shown in more detail. The conveyor 110 comprises a roller assembly and a carriage 220. The carriage 220 is configured to receive the sucker rod 10 to be inspected. The carriage 220 is configured to be moveable on the roller assembly. In this embodiment, the carriage 220 is configured to slide on the roller assembly. The sliding carriage moves on the roller assembly generally free of vibration. The vibration-less conveyance of the sucker rod 10 by the conveyor reduces the likelihood of unidentifiable signals being detected by the sensor assembly 160 as will be described.

In this embodiment, the roller assembly comprises a support, a first mounting plate 202, a first set of U brackets 204, a first set of rollers 206 and a first set of fasteners 208. The conveyor 110 further comprises a second mounting plate 212, a second set of U brackets 214, a second set of rollers 216 and a second set of fasteners 218.

The support is configured to support the plates 202 and 212. In this embodiment, the support is a right angled bracket 200. The bracket 200 has two perpendicular inner sides and two perpendicular outer sides. The first mounting plate 202 is affixed to one of the inner sides of the bracket 200. The first mounting plate 202 is configured to receive the first set of U brackets 204. In this embodiment, the first mounting plate 202 is an elongate planar plate. The first set of U brackets 204 are configured to receive the first set of rollers 206. As shown in Figure 3, the first set of U brackets 204 comprises U brackets that each receive more than roller of the first set of rollers 206. The first set of rollers 206 comprise rollers that are configured to be received within a U bracket of the first set of U brackets 204. Each roller is a cylinder. Each roller is rotatably affixed to a U bracket via a fastener of the first set of fasteners 208. The first set of rollers 206 is configured to receive the carriage 220 and allow for sliding movement of the carriage 220 on the first set of rollers 206.

The second mounting plate 212 is affixed to other inner side of the bracket 200. The second mounting plate 212 is perpendicular to the first mounting plate 202. The second mounting plate 212 is configured to receive the second set of U brackets 214. In this embodiment, the second mounting plate 212 is an elongate planar plate. The second set of U brackets 214 are configured to receive the second set of rollers 216. As shown in Figure 3, the second set of U brackets 214 comprises U brackets that each receive more than roller of the second set of rollers 216. The second set of rollers 216 comprise rollers that are configured to be received within a U bracket of the second set of U brackets 214. Each roller is a cylinder. Each roller is rotatably affixed to a U bracket via a fastener of the second set of fasteners 218. The second set of rollers 216 is configured to receive the carriage 220 and allow for sliding movement of the carriage 220 on the second set of rollers 216.

The sets of rollers 206 and 216 are arranged relative to the carriage 220 such that vibration of the sucker rod 10 on the carriage 220 is minimized during movement of the carriage 220 along the sets of rollers 206 and 216. In this embodiment, the sets of rollers 206 and 216 are generally perpendicular.

In the exemplary embodiment shown in Figure 2, bracket 200 has a width and height of 80 cm. The bracket 200 has a thickness of 8 cm. The mounting plates 202 and 212 extend a distance of 26 cm past the edge of the bracket 200. The mounting plates 202 and 212 have a thickness of 6 cm. A U bracket of the first set of U brackets 204 in combination with the rollers of the first set of rollers 206 mounted therein has a height of 40 cm. A U bracket of the second set of U brackets 214 in combination with the rollers of the second set of rollers 216 mounted therein has a height of 40 cm. The rollers of the sets of rollers 206 and 216 have a width of 25 cm. The rollers of the sets of rollers 206 and 216 have a height of 30 cm. The carriage 220 has a width and height of 50 cm. The carriage 220 has a thickness of 6 cm. One of skill in the art will appreciate that the dimensions provided are exemplary and that other dimensions are possible.

While a particular configuration of the conveyor 110 has been described, one of skill in the art will appreciate that variations are possible. In another embodiment, the first set of U brackets 204 comprises a single U bracket configured to receive all of the rollers of the first set of rollers 206. In another embodiment, the second set of U brackets 214 comprises a single U bracket configured to receive all of the rollers of the second set of rollers 216. These two embodiments may be combined.

The carriage 220 is size to receive the sucker rod 10 with centralizers 20. The carriage 220 is configured to slidingly move on the sets of rollers 206 and 216. The carriage 220 is generally L shaped, for example in this case with two equal perpendicular lengths. The carriage 220 is connected to the drive.

The drive is configured to move the carriage 220 along the sets of rollers 206 and 216. The drive is configured to move the carriage 220 through apertures in the coil arrangement and sensor assembly 160. The drive is configured to move the carriage 220 at a constant speed. The drive is configured to move the carriage 220 in the direction of Arrow A as shown in Figure 1. As will be described, the drive moves the carriage 220 from a loading zone 30 where the sucker rod 10 is loaded onto the carriage 220 through to an unloading zone 40 where the sucker rod is unloaded from the carriage 220. The carriage 220 moving at a constant speed on the sets of rollers 206 and 216 ensures that vibration of the sucker rod 10 is minimized to permit detection of faults in the sucker rod 10. Furthermore, moving at a constant speed may help when considered time-based processing as will be described.

In this embodiment, the drive comprises two motors and a traction rope (wire-pull-rope). A first motor, of the two motors, is arranged at one end of the conveyor 110 in the loading zone 30. A second motor, of the two motors, is arranged at the other end of the conveyor 110 in the unloading zone 40. The traction rope is connected to the first motor and to the second motor. The traction rope is further connected at an intermediate point thereof to the carriage 220. The second motor is configured to pull the traction rope to move the carriage 220 from the loading zone 30 to the unloading zone 40. While the second motor is pulling, the first motor is allowing the traction rope to be pulled. The first motor is configured to pull the traction rope to move the carriage 220 from the unloading zone 40 to the loading zone 30. While the first motor is pulling, the second motor is allowing the traction rope to be pulled.

While a particular drive has been described, one of skill in the art will appreciate that other configurations are possible. In another embodiment, the drive comprises a friction drive. In another embodiment, the drive comprises belts.

As previously stated, the wellbore rod inspection system 100 further comprises the coil arrangement. The coil arrangement is configured to generate a magnetic field to magnetize the sucker rod 10. The magnetic field is nearly uniform, or at least generally uniform at the region of desired inspection. In this embodiment, the coil arrangement comprises a Helmholtz coil 150. The Helmholtz coil 150 comprises a first magnetic coil 152 and a second magnetic coil 154. The first and second magnetic coils 152 and 154, respectively, are identical. The first and second magnetic coils 152 and 154, respectively, are circular and generally ring shaped. The first and second magnetic coils 152 and 154, respectively, are parallel along the longitudinal axis of the conveyor 110. The first and second magnetic coils 152 and 154, respectively, are separated by a distance approximately equal to the radius of the coils 152 and 154. Each of the first and second magnetic coils 152 and 154, respectively, have a central aperture through which the conveyor 110 passes. The apertures are sized such that the conveyor 110 and the sucker rod 10 with centralizers can pass through the apertures without damaging the Helmholtz coil 150.

While a particular coil arrangement has been describe, one of skill in the art will appreciate that other configurations are possible. In another embodiment, the coil arrangement comprises a single coil configured to generate a nearly uniform magnetic field at the region of desired inspection.

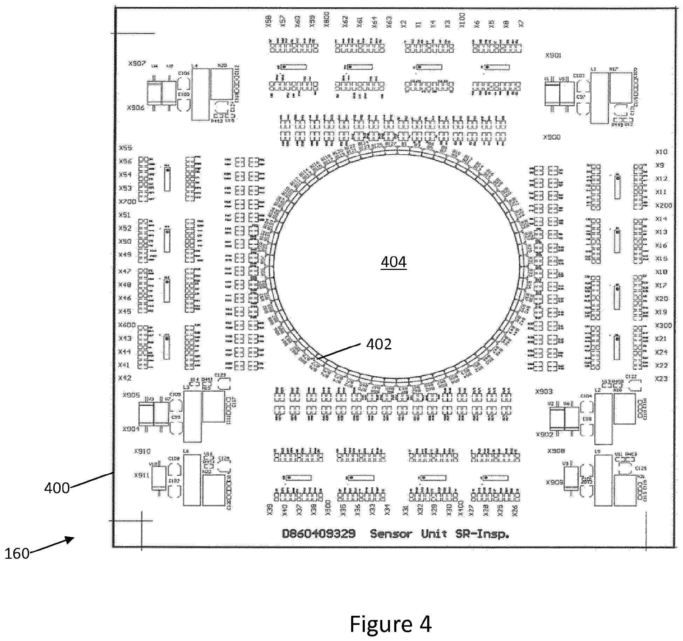

As previously stated, the wellbore rod inspection system 100 further comprises the sensor assembly 160. The sensor assembly 160 is configured to detect magnetic flux leakage from the sucker rod 10. Turning now to Figure 4, a plan view of the sensor assembly 160 is shown. The sensor assembly 160 comprises a printed circuit board (PCB) 400 and radially spaced sensors 402. The sensors 402 are configured to detect magnetic flux leakage from the sucker rod 10 after it has been magnetized by the Helmholtz coil 150. The radially spaced sensors 402 are mounted on the PCB 400. The radially spaced sensors 402 are positioned to form a central aperture 404 in the PCB 400. The central aperture 404 is sized such that the conveyor 110 with the sucker rod 10 having centralizers 20 can pass through the central aperture 404 without contacting the sensors 402. The central aperture 404 is sized such that distance between the sensors 402 and the sucker rod 10 allows for meaningful detection of the magnetic flux leakage when the sucker rod 10 is within the central aperture 404, and such that the sucker rod 10 and centralizers 20 may pass through the central aperture 404 without contacting the sensors 402.

The sensors 402 are configured to detect magnetic flux leakage from the sucker rod 10 via non-contact detection. In this embodiment, all of the sensors 402 are active while the sucker rod 10 passes through the central aperture 404. In this embodiment, magnetic flux leakage is detected by each sensor 402. In this embodiment, there are sixty-four (64) sensors 402. One of skill in the art will appreciate that more or fewer may be employed.

As previously stated, the wellbore rod inspection system 100 further comprises a processor (not shown). The processor is configured to process the detected magnetic flux leakage to detect faults in the sucker rod. The processor may comprise one of or more of memory (volatile and/or non-volatile), other non-removable or removable memory (a hard disk drive, RAM, ROM, EEPROM, CD-ROM, DVD, flash memory etc.) and a bus coupling the various computing device components to the processor. The processor receives as input the magnetic flux leakage detected by the sensors 402 and determines if one or more faults are present in the sucker rod 10. The processor receives the magnetic flux leakage detected by each sensor 402. The magnetic flux leakage detected by each sensor 402 is summed to form a single summary signal. As the length of the sucker rod 10 is known, and the sucker rod 10 moves at a constant speed, the processor processes the summary signal on a time basis. Time-based processing removes the need for a length encoder or equivalent.

In this embodiment, the processor is external to the sensor assembly 150. The processor is located in an instrumentation unit that is external to the wellbore rod inspection system 100. The magnetic flux leakage detected by the sensors 402 of the sensors assembly 150 is transmitted to the processor in the instrumentation unit. In this embodiment, the detected magnetic flux leakage is transmitted from the sensors assembly 160 to the instrumentation unit via wired connection.

While a particular configuration of the processor has been described, one of skill in the art will appreciate that other configurations are possible. In another embodiment, the instrumentation unit further comprises a rectifier and an analogue-to-digital converter (ADC). The rectifier is configured to rectify the detected magnetic flux leakage. The rectifier is communicatively coupled to the ADC. The ADC is configured to convert an analogue signal to a digital signal. The ADC is communicatively connected to the rectifier. The ADC is communicatively connected to the processor. The ADC is configured to receive the rectified detected magnetic flux leakage in analogue and to convert the leakage to a numerical result in digital. The ADC is configured to transmit the numerical result to the processor. In this embodiment, the ADC is a 12-bit ADC. The highest numerical value output by the ADC is 64 × 2048 due to rectification.

While a particular configured to the processor has been described, one of skill in the art will appreciate that other configurations are possible. In another embodiment, the processor is integrated into the PCB 400 of the sensor assembly 400. In another embodiment, the instrumentation unit forms part of the wellbore rod inspection system 100. In another embodiment, the detected magnetic flux leakage is transmitted to the processor via wireless connection. One of skill in the art will appreciate that these various embodiments may be combined.

In use, the sucker rod 10 comprising centralizers 20 is loaded onto the conveyor 110 in the loading zone 30. Specifically, the sucker rod 10 is loaded onto the carriage 220 of the conveyor 110. The sucker rod 10 is conveyed on the conveyor 110 from the loading zone 30 towards the Helmholtz coil 150. Specifically, the sucker rod 10 is conveyed on the carriage 220 in order to minimise vibrational effects of the rod as it passes through the system, and in this example that is helped by the rollers 206 and 216. The carriage 220 along the rollers 206 and 216 is pulled by the drive. The sucker 10 rod 10 is conveyed through the apertures in the magnetic coils 152 and 154 of the Helmholtz coil 150 and, as such, the sucker rod 10 can be magnetized by the Helmholtz coil 150. As the sucker rod 10 is conveyed through the first and second magnetic coils 152 and 154, respectively, the sucker rod 10 is conveyed through the sensor assembly 160. Magnetic flux leakage from the sucker rod 10 is detected by the sensors assembly 160. Specifically, magnetic flux leakage from the sucker rod 10 is detected by the sensors 402. The detected magnetic flux leakage is processed by the processor to detect faults in the sucker rod 10. Specifically, the processor receives the detected magnetic flux leakage from the sensors 402 and processes the detected magnetic flux leakage to determine if any faults are present on the sucker rod 10. If a fault is determined to be present on the sucker rod 10, the sucker rod 10 is sorted out and no longer used.

The use of the carriage 220 along the rollers 206 and 216 mitigates vibration of the sucker rod 10. Vibration mitigation ensures accurate magnetic flux leakage detection. This reduces the likelihood of erroneous detection.

The use of non-contact sensors 402 ensure the centralizers 20 do not need to be removed from the sucker rod 10 to detect magnetic flux leakage. This reduces costs and time of wellbore rod inspection when compared with prior art systems.

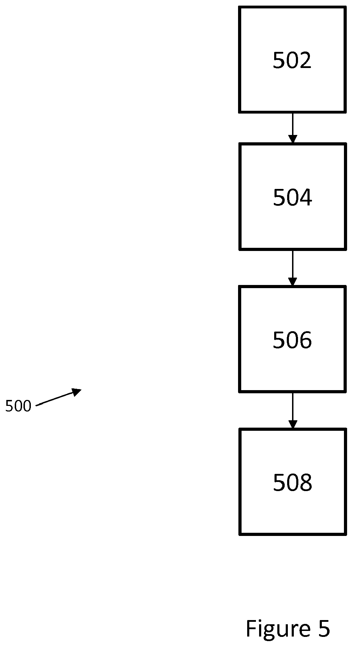

Turning now to Figure 5, a flow chart of a method of inspecting a wellbore rod is shown generally identified by reference character 500. In this embodiment, the wellbore rod is a sucker rod. The method 500 comprises conveying 502 a sucker rod on a conveyor comprising a carriage along rollers (e.g. two sets of rollers, which may be perpendicular). The system magnetizes 504 the sucker rod with a Helmholtz coil; and detects 506 magnetic flux leakage from the sucker rod with a sensor assembly comprising radially spaced sensors. Here, the method comprises processing 508 the detected magnetic flux leakage to detect faults in the sucker rod. If a fault is detected in the sucker rod 10, the sucker rod 10 is sorted out and no longer used.

As will be appreciated, the method 500 may be carried out on the previously described wellbore rod inspection system 100.

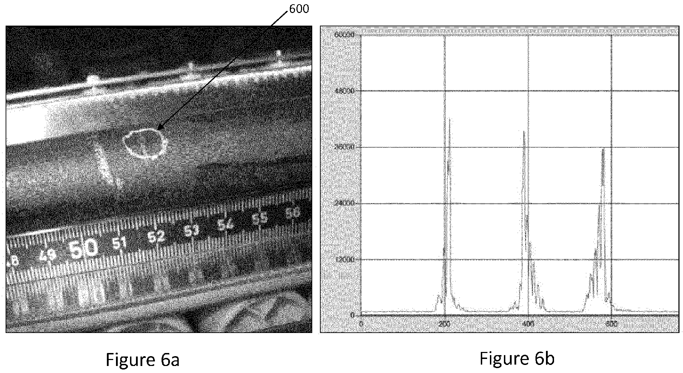

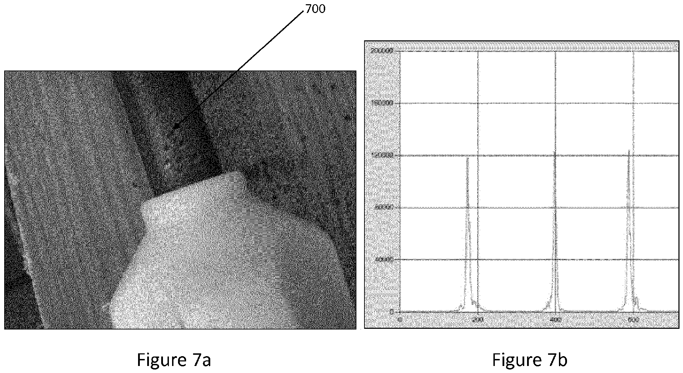

Simulation of the wellbore rod inspection system 100 performing the method 500 was performed. Referring now to Figures 6a, 6b, 7a and 7b simulations results will be further described. Figure 6a is a photograph of the sucker rod 10 with a fault 600 circled in white. In this simulation, the fault 600 is a hole. The hole is approximately 2 mm deep. The hole has a radius of approximately 1.6 mm. This may be considered to be a localised anomaly associated with the rod, e.g. compared to the global condition of the rod. Figure 6b is a graph of the simulation measurement of the sucker rod 10 shown in Figure 6a. Specifically, Figure 6b is a graph of the detected magnetic flux leakage digital numerical results versus the longitudinal position of the sucker rod 10. As shown in Figure 6b, the detected magnetic flux leakage clearly spikes at approximately 205, 395 and 580. The spikes in the magnetic flux leakage indicate the presence of the fault 600 in the sucker rod 10. As shown in Figure 6b, the wellbore rod inspection system 100 is able to detect the fault 600 in the sucker rod 10.

Figure 7a is a photograph of the sucker rod 10 with faults 700 proximate a centralizer 20 of the sucker rod 10. In this simulation, the faults 700 are multiple pits in the sucker rod 10. Figure 7b is a graph of the simulation measurement of the sucker rod 10 shown in Figure 7a. Specifically, Figure 7b is a graph of the detected magnetic flux leakage as digital numerical results versus the longitudinal position of the sucker rod 10. As shown in Figure 7b, the detected magnetic flux leakage clearly spikes at approximately 205, 395 and 580. The spikes in the magnetic flux leakage indicate presence of the faults 700 in the sucker rod 10. As shown in Figure 7b, the wellbore rod inspection system 100 is able to detect the faults 700 in the sucker rod 10.

As shown in Figures 6b and 7b, the wellbore rod inspection system 100 and/or method 500 may detect faults in a sucker rod 10. However, sucker rods having a degree of corrosion may be problematic. During use, sucker rods may be corroded along a portion or along an entire length thereof (e.g. a global condition). A certain degree of corrosion may be acceptable and the sucker rod may continue to be used. However, inspection of a sucker rod with a degree of corrosion with the wellbore rod inspection system 100 and/or method 500 may introduce a level of noise from the corrosion that makes detection of faults difficult, if at all possible. The signal to noise (SNR) ratio of the magnetic flux leakage becomes too high to detect faults in the sucker rod 10.

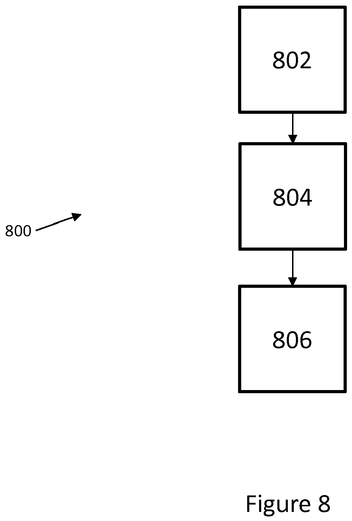

Accordingly, in another embodiment, the sensor assembly 160 is configured to detect magnetic flux leakage and process the detected magnetic flux leakage according to a detection and processing method. Turning now to Figure 8, a flowchart of the detection and processing method generally identified by reference numeral 800 is shown. The detection and processing method 800 comprises detecting 802 magnetic flux leakage at a leading zone of the sucker rod 10. After the magnetic flux leakage is detected at the leading zone of the sucker rod 10, the method further comprises detecting 804 magnetic flux leakage at a lagging zone of the sucker rod 19. The leading zone may be considered to be longitudinally in advance of the lagging zone on the sucker rod 10 as the sucker rod 10 is conveyed. The method 800 further comprises processing the detected magnetic flux leakage at the leading zone and the detected magnetic flux leakage at the lagging zone to detect faults in the sucker rod 10, as will be described.

In this embodiment, processing the detected magnetic flux leakage at the leading and lagging zone comprises subtracting 806 the sensed magnetic flux leakage at the leading zone from the sensed magnetic flux leakage at the lagging zone to detect faults in the sucker rod 10. Subtracting 806 the magnetic flux leakage at the leading zone form the magnetic flux leakage at the lagging zone may result in the generally uniform corrosion of the sucker rod 10 being supressed, whereas individual faults or local variations in the sucker rod 10 may be not supressed (e.g. more easily identified).

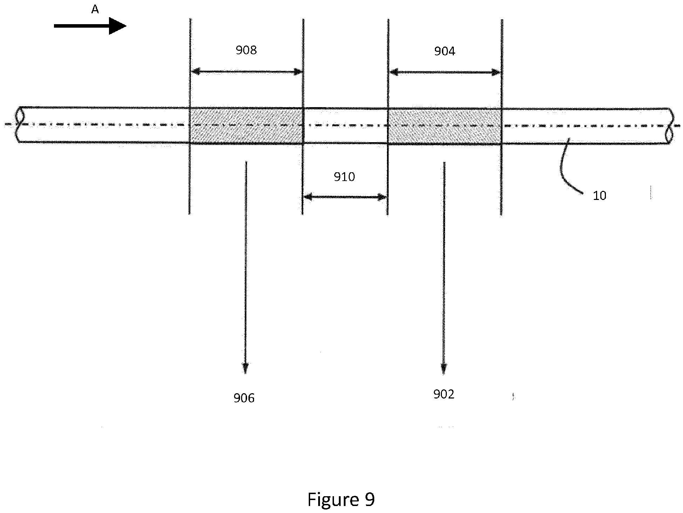

Turning now to Figure 9, a diagram of the sucker rod 10 with highlighted zones is shown. As the sucker rod 10 is conveyed through the sensors assembly 160 in the direction of arrow A, the sensors 402 detect the magnetic flux leakage at the leading zone 904 of the sucker rod 10.

In this embodiment, detecting 802 the magnetic flux leakage at the leading zone 904 comprises continuously detecting the magnetic flux leakage at the leading zone 904 while the sucker rod 10 is conveyed. In this embodiment, the detected magnetic flux leakage at the leading zone 904 comprises a moving average 902 of the magnetic flux leakage over the leading zone 904 of the sucker rod 10.

In this embodiment, detecting 804 the magnetic flux leakage at the lagging zone 908 comprises continuously detecting the magnetic flux leakage at the lagging zone 908 while the sucker rod 10 is conveyed. In this embodiment, the detected magnetic flux leakage at the lagging zone 908 comprises a moving average 906 of the magnetic flux leakage over the lagging zone 908 of the sucker rod 10.

The leading zone 904 is separated from the lagging zone 908 by a distance 910. The sucker rod 10 is conveyed such that magnetic flux leakage is detected at the leading zone 904 prior to magnetic flux leakage being detected at the lagging zone 908. The distance 910 is set such that fault detection is not supressed. In this embodiment, the distance 910 is 12 mm (1/2 inch).

As previously stated, sensors 402 are configured to each individually detect magnetic flux leakage and sum the individually detected magnetic flux leakage into one summary signal. In this embodiment, each sensor 402 is configured to detect an individual leading value of magnetic flux leakage. The individually detected leading values of magnetic flux leakage are summed into one leading summary signal. Each sensor 402 is further configured to detect an individual lagging value of magnetic flux leakage. The individually detected lagging values of magnetic flux leakage are summed into one lagging summary signal.

Subtracting the moving average 906 in the lagging zone 908 from the moving average 902 in the leading zone 904 results in corrosion across the sucker rod 10 (i.e. uniform corrosion) being supressed. Conversely, individual faults in the sucker rod 10 may still be detected. Changes in the corrosion (e.g. depth, morphology) may also still be detected. Once identified/detected, a decision on the further use of service of that rod may accurately be made, with ease, and cost effectively.

Although embodiments have been described above and are shown in the accompanying drawings, it will be appreciated by one of skill in the art that variations and modifications may be made without departing from the scope as defined by the appended claims, and the scope of the claims should be given the broadest interpretation consistent with the specification as a whole.

## Claims

1. A wellbore rod inspection system (100) comprising:
a conveyor (110) comprising a roller assembly, and a carriage (220) configured to receive a wellbore rod (10) to be inspected and to be movable on the roller assembly;
a drive configured to convey the carriage (220) carrying a wellbore rod (10) for inspection on the roller assembly at a constant speed through apertures in a coil arrangement and sensor assembly (160);
the coil arrangement configured to produce a magnetic field to magnetize the wellbore rod (10) carried on the carriage (220) conveyed by the drive;
a sensor assembly (160) comprising sensors (402) radially spaced around an aperture through which the drive is configured to convey the carriage (220) carrying a wellbore rod (10) for inspection along the roller assembly, the sensor assembly (160) configured to detect magnetic flux leakage from the magnetized wellbore rod (10); and
a processor configured to process the detected magnetic flux leakage to detect faults (600, 700) in the wellbore rod (10).

2. The wellbore rod inspection system (100) of claim 1, wherein the sensor assembly (160) is further configured to:
detect magnetic flux leakage at a leading zone of the wellbore rod (10); and
detect magnetic flux leakage at a lagging zone of the wellbore rod (10), the leading zone being longitudinally in advance of the lagging zone on the wellbore rod (10) as the wellbore rod (10) is conveyed.

3. The wellbore rod inspection system (100) of claim 2, wherein the processor is further configured to:
subtract the magnetic flux leakage at the leading zone from the magnetic flux leakage at the lagging zone to detect faults (600, 700) in the wellbore rod (10).

4. The wellbore rod inspection system (100) of any preceding claim, wherein the sensors (402) are radially mounted on a printed circuit board, PCB, (400) and the sensors (402) are positioned to form a central aperture (404) in the PCB (400).

5. The wellbore rod inspection system (100) of any one of claims 1 to 4, wherein the coil arrangement comprises a Helmholtz coil (150), and wherein the sensor assembly (160) is positioned between two spaced apart magnetic coils (152, 154) of the Helmholtz coil (150).

6. The wellbore rod inspection system (100) of any preceding claim, wherein the roller assembly comprises:
a first set of rollers (206) mounted on a first set of U brackets (204) on a first mounting plate (202); and
a second set of roller (216) mounted on a second set of U brackets (214) on a second mounting plate (212).

7. A method (500) of inspecting a wellbore rod (10), the method (500) comprising:
conveying (502) at a constant speed, via a drive, a wellbore rod (10) on a carriage (220) movable on a roller assembly through apertures in a coil arrangement and sensor assembly (150);
magnetizing (504) the wellbore rod (10) with the coil arrangement, the wellbore rod (10) carried on the carriage (220) conveyed by the drive on the roller assembly;
detecting (506) magnetic flux leakage from the wellbore rod (10) with a sensor assembly (160) comprising sensors (402) radially spaced around an aperture through which the drive is configured to convey the carriage (220) carrying the wellbore rod (10); and
processing (508) the detected magnetic flux leakage to detect faults (600, 700) in the wellbore rod (10).

8. The method (500) of claim 7, wherein detecting (506) magnetic flux leakage comprises:
detecting (802) magnetic flux leakage at a leading zone of the wellbore rod (10); and
detecting (804) magnetic flux leakage at a lagging zone of the wellbore rod (10), the leading zone being longitudinally in advance of the lagging zone on the wellbore rod (10) as the wellbore rod (10) is conveyed.

9. The method (500) of claim 8, wherein the processing (508) comprises:
subtracting (804) the magnetic flux leakage at the leading zone from the magnetic flux leakage at the lagging zone to detect faults (600, 700) in the wellbore rod (10).

10. The method (500) of claim 9, wherein conveying (502) the wellbore rod (10) comprises slidingly driving the carriage (220) on sets of perpendicular rollers (206, 216) of the roller assembly.

11. The method (500) of claim 9 or 10, wherein magnetizing (504) the wellbore rod (10) comprises magnetizing the wellbore rod (10) with a magnetic field generated by a Helmholtz coil (150), and wherein conveying (502) the wellbore rod (10) comprises:
conveying the wellbore rod (10) through an aperture of a first magnetic coil (152) of the Helmholtz coil (150);
conveying the wellbore rod (10) through an aperture formed by the spaced sensors (402) of the sensor assembly; and
conveying the wellbore rod (10) through an aperture formed by a second magnetic coil (154) of the Helmholtz coil (150).

12. The method (500) of any one of claims 8 to 11, wherein detecting (802) the magnetic flux leakage at the leading zone comprises continuously detecting the magnetic flux leakage at the leading zone while the wellbore rod (10) is conveyed.

13. The method (500) of any one of claims 8 to 12, wherein the magnetic flux leakage at the leading zone comprises a moving average of the magnetic flux leakage over the leading zone of the wellbore rod (10).

14. The method (500) of any one of claims 8 to 13, wherein detecting (804) the magnetic flux leakage at the lagging zone comprises continuously detecting the magnetic flux leakage at the lagging zone while the wellbore rod (10) is conveyed.

15. The method (500) of any one of claims 8 to 14, wherein the magnetic flux leakage at the lagging zone comprises a moving average of the magnetic flux leakage over the lagging zone of the wellbore rod (10).

## Patentansprüche

1. Bohrlochstangen-Inspektionssystem (100), das Folgendes umfasst:
einen Förderer (110), der eine Rollenbaugruppe umfasst, und einen Schlitten (220), der dazu konfiguriert ist, eine zu inspizierende Bohrlochstange (10) aufzunehmen, und auf der Rollenbaugruppe bewegbar zu sein;
einen Antrieb, der dazu konfiguriert ist, den Schlitten (220), der eine zu inspizierende Bohrlochstange (10) trägt, auf der Rollenbaugruppe mit einer konstanten Geschwindigkeit durch Öffnungen in einer Spulenanordnung und Sensorbaugruppe (160) zu befördern;
wobei die Spulenanordnung dazu konfiguriert ist, ein Magnetfeld zu erzeugen, um die Bohrlochstange (10), die auf dem Wagen (220) getragen wird, der von dem Antrieb befördert wird, zu magnetisieren;
eine Sensoranordnung (160), die Sensoren (402) umfasst, die radial um eine Öffnung beabstandet sind, durch die hindurch der Antrieb dazu konfiguriert ist, den Schlitten (220), der eine zu inspizierende Bohrlochstange (10) trägt, entlang der Rollenbaugruppe zu fördern, wobei die Sensorbaugruppe (160) dazu konfiguriert ist, magnetischen Streufluss aus der magnetisierten Bohrlochstange (10) zu erfassen; und
einen Prozessor, der dazu konfiguriert ist, den erfassten magnetischen Streufluss zu verarbeiten, um Mängel (600, 700) in der Bohrlochstange (10) zu erfassen.

2. Bohrlochstangen-Inspektionssystem (100) nach Anspruch 1, wobei die Sensorbaugruppe (160) ferner dazu konfiguriert ist:
magnetischen Streufluss an einer vorderen Zone der Bohrlochstange (10) zu erfassen; und
magnetischen Streufluss an einer hinteren Zone der Bohrlochstange (10) zu erfassen, wobei die vordere Zone in Längsrichtung vor der hinteren Zone auf der Bohrlochstange (10) liegt, während die Bohrlochstange (10) befördert wird.

3. Bohrlochstangen-Inspektionssystem (100) nach Anspruch 2, wobei der Prozessor ferner dazu konfiguriert ist:
den magnetischen Streufluss an der vorderen Zone von dem magnetischen Streufluss an der hinteren Zone zu subtrahieren, um Mängel (600, 700) in der Bohrlochstange (10) zu erfassen.

4. Bohrlochstangen-Inspektionssystem (100 nach einem vorstehenden Anspruch, wobei die Sensoren (402) radial auf einer Leiterplatte, PCB, (400) montiert sind, und die Sensoren (402) positioniert sind, um eine zentrale Öffnung (404) in der PCB (400) zu bilden.

5. Bohrlochstangen-Inspektionssystem (100) nach einem der Ansprüche 1 bis 4, wobei die Spulenanordnung eine Helmholtz-Spule (150) umfasst, und wobei die Sensorbaugruppe (160) zwischen zwei beabstandeten Magnetspulen (152, 154) der Helmholtz-Spule (150) positioniert ist.

6. Bohrlochstangen-Inspektionssystem (100) nach einem vorstehenden Anspruch, wobei die Rollenbaugruppe Folgendes umfasst:
einen ersten Satz von Rollen (206), der auf einem ersten Satz von U-Halterungen (204) auf einer ersten Montageplatte (202) montiert ist, und
einen zweiten Satz von Rollen (216), der auf einem zweiten Satz von U-Halterungen (214) auf einer zweiten Montageplatte (212) montiert ist.

7. Verfahren (500) zum Inspizieren einer Bohrlochstange (10), wobei das Verfahren (500) Folgendes umfasst:
Befördern (502) mit einer konstanten Geschwindigkeit über einen Antrieb einer Bohrlochstange (10) auf einem Schlitten (220), der auf einer Rollenbaugruppe durch Öffnungen in einer Spulenanordnung und einer Sensorbaugruppe (150) bewegbar ist,
Magnetisieren (504) der Bohrlochstange (10) mit der Spulenanordnung, wobei die Bohrlochstange (10) auf dem Schlitten (220), der von dem Antrieb auf der Rollenbaugruppe befördert wird, getragen wird,
Erfassen (506) eines magnetischen Streuflusses von der Bohrlochstange (10) mit einer Sensorbaugruppe (160), die Sensoren (402) umfasst, die radial um eine Öffnung beabstandet sind, durch die hindurch der Antrieb dazu konfiguriert ist, den Schlitten (220), der die Bohrlochstange (10) trägt, zu befördern; und
Verarbeiten (508) des erfassten magnetischen Streuflusses, um Mängel (600, 700) in der Bohrlochstange (10) zu erfassen.

8. Verfahren (500) nach Anspruch 7, wobei das Erfassen (506) eines magnetischen Streuflusses Folgendes umfasst:
Erfassen (802) eines magnetischen Streuflusses an einer vorderen Zone der Bohrlochstange (10); und
Erfassen (804) eines magnetischen Streuflusses an einer hinteren Zone der Bohrlochstange (10), wobei die vordere Zone in Längsrichtung vor der hinteren Zone auf der Bohrlochstange (10) liegt, während die Bohrlochstange (10) befördert wird.

9. Verfahren (500) nach Anspruch 8, wobei das Verarbeiten (508) Folgendes umfasst:
Subtrahieren (804) des magnetischen Streuflusses an der vorderen Zone von dem magnetischen Streufluss an der hinteren Zone, um Mängel (600, 700) in der Bohrlochstange (10) zu erfassen.

10. Verfahren (500) nach Anspruch 9, wobei das Befördern (502) der Bohrlochstange (10) das schiebende Antreiben des Schlittens (220) auf Sätzen senkrechter Rollen (206, 216) der Rollenbaugruppe umfasst.

11. Verfahren (500) nach Anspruch 9 oder 10, wobei das Magnetisieren (504) der Bohrlochstange (10) das Magnetisieren der Bohrlochstange (10) mit einem Magnetfeld umfasst, das von einer Helmholtz-Spule (150) erzeugt wird, und wobei das Befördern (502) der Bohrlochstange (10) Folgendes umfasst:
Befördern der Bohrlochstange (10) durch eine Öffnung einer ersten Magnetspule (152) der Helmholtz-Spule (150);
Befördern der Bohrlochstange (10) durch eine Öffnung, die von den beabstandeten Sensoren (402) der Sensorbaugruppe gebildet wird, und
Befördern der Bohrlochstange (10) durch eine Öffnung, die von einer zweiten Magnetspule (154) der Helmholtz-Spule (150) gebildet wird.

12. Verfahren (500) nach einem der Ansprüche 8 bis 11, wobei das Erfassen (802) des magnetischen Streuflusses an der vorderen Zone das kontinuierliche Erfassen des magnetischen Streuflusses an der vorderen Zone umfasst, während die Bohrlochstange (10) befördert wird.

13. Verfahren (500) nach einem der Ansprüche 8 bis 12, wobei der magnetische Streufluss an der vorderen Zone einen gleitenden Durchschnitt des magnetischen Streuflusses über die vordere Zone der Bohrlochstange (10) umfasst.

14. Verfahren (500) nach einem der Ansprüche 8 bis 13, wobei das Erfassen (804) des magnetischen Streuflusses an der hinteren Zone das kontinuierliche Erfassen des magnetischen Streuflusses an der hinteren Zone umfasst, während die Bohrlochstange (10) befördert wird.

15. Verfahren (500) nach einem der Ansprüche 8 bis 14, wobei der magnetische Streufluss an der hinteren Zone einen gleitenden Durchschnitt des magnetischen Streuflusses über die hintere Zone der Bohrlochstange (10) umfasst.

## Revendications

1. Système d'inspection de tige de puits de forage (100) comprenant :
un transporteur (110) comprenant un ensemble de rouleaux, et un chariot (220) configuré pour recevoir une tige de puits de forage (10) à inspecter et pour être mobile sur l'ensemble de rouleaux ;
un dispositif d'entraînement configuré pour transporter le chariot (220) portant une tige de puits de forage (10) à inspecter sur l'ensemble de rouleaux à une vitesse constante à travers des ouvertures dans un agencement de bobine et un ensemble capteur (160) ;
l'agencement de bobine étant configuré pour produire un champ magnétique pour magnétiser la tige de puits de forage (10) portée sur le chariot (220) transporté par le dispositif d'entraînement ;
un ensemble capteur (160) comprenant des capteurs (402) espacés radialement autour d'une ouverture à travers laquelle le dispositif d'entraînement est configuré pour transporter le chariot (220) portant une tige de puits de forage (10) à inspecter le long de l'ensemble de rouleaux, l'ensemble capteur (160) étant configuré pour détecter une fuite de flux magnétique à partir de la tige de forage magnétisée (10) ; et
un processeur configuré pour traiter la fuite de flux magnétique détectée pour détecter des défauts (600, 700) dans la tige de puits de forage (10).

2. Système d'inspection de tige de puits de forage (100) selon la revendication 1, dans lequel l'ensemble capteur (160) est configuré en outre pour :
détecter une fuite de flux magnétique au niveau d'une zone avant de la tige de puits de forage (10) ; et
détecter une fuite de flux magnétique au niveau d'une zone arrière de la tige de puits de forage (10), la zone avant étant longitudinalement devant la zone arrière de la tige de puits de forage (10) lorsque la tige de puits de forage (10) est transportée.

3. Système d'inspection de tige de puits de forage (100) selon la revendication 2, dans lequel le processeur est configuré en outre pour :
soustraire la fuite de flux magnétique au niveau de la zone avant de la fuite de flux magnétique au niveau de la zone arrière pour détecter des défauts (600, 700) dans la tige de puits de forage (10).

4. Système d'inspection de tige de puits de forage (100) selon l'une quelconque des revendications précédentes, dans lequel les capteurs (402) sont montés radialement sur une carte à circuit imprimé, PCB, (400) et les capteurs (402) sont positionnés de façon à former une ouverture centrale (404) dans la PCB (400).

5. Système d'inspection de tige de puits de forage (100) selon l'une quelconque des revendications 1 à 4, dans lequel l'agencement de bobine comprend une bobine de Helmholtz (150), et dans lequel l'ensemble capteur (160) est positionné entre deux bobines magnétiques (152, 154) espacées de la bobine de Helmholtz (150).

6. Système d'inspection de tige de puits de forage (100) selon l'une quelconque des revendications précédentes, dans lequel l'ensemble de rouleaux comprend :
une première série de rouleaux (206) montés sur une première série de supports en U (204) sur une première plaque de montage (202) ; et
une deuxième série de rouleaux (216) montés sur une deuxième série de supports en U (214) sur une deuxième plaque de montage (212).

7. Procédé (500) d'inspection de tige de puits de forage (10), le procédé (500) comprenant :
le transport (502) à une vitesse constante, par l'intermédiaire d'un dispositif d'entraînement, d'une tige de puits de forage (10) sur un chariot (220) mobile sur un ensemble de rouleaux à travers des ouvertures dans un agencement de bobine et un ensemble capteur (150) ;
la magnétisation (504) de la tige de puits de forage (10) au moyen de l'agencement de bobine, la tige de puits de forage (10) étant portée par le chariot (220) transporté par le dispositif d'entraînement sur l'ensemble de rouleaux ;
la détection (506) d'une fuite de flux magnétique de la tige de puits de forage (10) au moyen d'un ensemble capteur (160) comprenant des capteurs (402) espacés radialement autour d'une ouverture à travers laquelle le dispositif d'entraînement est configuré pour transporter le chariot (220) portant la tige de puits de forage (10) ; et
le traitement (508) de la fuite de flux magnétique détectée pour détecter des défauts (600, 700) dans la tige de puits de forage (10).

8. Procédé (500) selon la revendication 7, dans lequel la détection (506) d'une fuite de flux magnétique comprend :
la détection (802) d'une fuite de flux magnétique au niveau d'une zone avant de la tige de puits de forage (10) ; et
la détection (804) d'une fuite de flux magnétique au niveau d'une zone arrière de la tige de puits de forage (10), la zone avant étant longitudinalement devant la zone arrière de la tige de puits de forage (10) lorsque la tige de puits de forage (10) est transportée.

9. Procédé (500) selon la revendication 8, dans lequel le traitement (508) comprend :
la soustraction (804) de la fuite de flux magnétique au niveau de la zone avant de la fuite de flux magnétique au niveau de la zone arrière pour détecter des défauts (600, 700) dans la tige de puits de forage (10).

10. Procédé (500) selon la revendication 9, dans lequel le transport (502) de la tige de puits de forage (10) comprend l'entraînement de façon coulissante du chariot (220) sur des séries de rouleaux perpendiculaires (206, 216) de l'ensemble de rouleaux.

11. Procédé (500) selon la revendication 9 ou 10, dans lequel la magnétisation (504) de la tige de puits de forage (10) comprend la magnétisation de la tige de puits de forage (10) avec un champ magnétique généré par une bobine de Helmholtz (150), et dans lequel le transport (502) de la tige de puits de forage (10) comprend :
le transport de la tige de puits de forage (10) à travers une ouverture d'une première bobine magnétique (152) de la bobine de Helmholtz (150) ;
le transport de la tige de puits de forage (10) à travers une ouverture formée par les capteurs espacés (402) de l'ensemble capteur ; et
le transport de la tige de puits de forage (10) à travers une ouverture formée par une deuxième bobine magnétique (154) de la bobine de Helmholtz (150).

12. Procédé (500) selon l'une quelconque des revendications 8 à 11, dans lequel la détection (802) de la fuite de flux magnétique au niveau de la zone avant comprend la détection en continu de la fuite de flux magnétique au niveau de la zone avant lorsque la tige de puits le forage (10) est transportée.

13. Procédé (500) selon l'une quelconque des revendications 8 à 12, dans lequel la fuite de flux magnétique au niveau de la zone avant comprend une moyenne mobile de la fuite de flux magnétique sur la zone avant de la tige de puits de forage (10).

14. Procédé (500) selon l'une quelconque des revendications 8 à 13, dans lequel la détection (804) de la fuite de flux magnétique au niveau de la zone arrière comprend la détection en continu de la fuite de flux magnétique au niveau de la zone arrière lorsque la tige de puits de forage (10) est transportée.

15. Procédé (500) selon l'une quelconque des revendications 8 à 14, dans lequel la fuite de flux magnétique au niveau de la zone arrière comprend une moyenne mobile de la fuite de flux magnétique sur la zone arrière de la tige de puits de forage (10).
